(19) Europäisches Patentamt
European Patent Office
Office européen des brevets

(11) **EP 3 457 697 B1**

(12) **EUROPEAN PATENT SPECIFICATION**

(45) Date of publication and mention
of the grant of the patent:
**04.08.2021  Bulletin 2021/31**

(21) Application number: **17812698.3**

(22) Date of filing: **13.06.2017**

(51) Int Cl.:
*H04N 19/59* [(2014.01)]   *H04N 19/119* [(2014.01)]
*H04N 19/80* [(2014.01)]   *H04N 19/44* [(2014.01)]
*H04N 19/597* [(2014.01)]   *H04N 19/70* [(2014.01)]
*H04N 19/33* [(2014.01)]

(86) International application number:
**PCT/CN2017/088024**

(87) International publication number:
**WO 2017/215587 (21.12.2017 Gazette 2017/51)**

(54) **METHOD AND APPARATUS FOR ENCODING AND DECODING VIDEO IMAGE**

VERFAHREN UND VORRICHTUNG ZUR KODIERUNG UND DEKODIERUNG VON VIDEOBILDERN

PROCÉDÉ ET APPAREIL PERMETTANT DE CODER ET DE DÉCODER UNE IMAGE VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2016  CN 201610430405**

(43) Date of publication of application:
**20.03.2019  Bulletin 2019/12**

(73) Proprietors:
• **Huawei Technologies Co., Ltd.
Longgang District
Shenzhen, Guangdong 518129 (CN)**
• **University of Science and Technology of China
Anhui 230026 (CN)**

(72) Inventors:
• **YANG, Haitao
Shenzhen
Guangdong 518129 (CN)**
• **LI, Li
Hefei
Anhui 230026 (CN)**
• **LI, Houqiang
Hefei
Anhui 230026 (CN)**

(74) Representative: **Thun, Clemens
Mitscherlich PartmbB
Patent- und Rechtsanwälte
Sonnenstraße 33
80331 München (DE)**

(56) References cited:
**EP-A1- 2 490 179      EP-A2- 1 162 830
CN-A- 101 389 014    CN-A- 101 389 021
CN-A- 102 595 123    US-A1- 2012 014 437**

• **YAGO SANCHEZ DE LA FUENTE ET AL:
"Compressed Domain Video Processing for Tile
Based Panoramic Streaming using SHVC",
IMMERSIVE MEDIA EXPERIENCES, ACM, 2 PENN
PLAZA, SUITE 701 NEW YORK NY 10121-0701
USA, 30 October 2015 (2015-10-30), pages 13-18,
XP058074928, DOI: 10.1145/2814347.2814353
ISBN: 978-1-4503-3745-8**

## Description

### TECHNICAL FIELD

Embodiments of the present invention relate to the field of video image compression, and in particular, to a video image encoding method and apparatus, and a video image decoding method and apparatus.

### BACKGROUND

With the rapid popularity of a series of virtual reality (VR) products and applications such as virtual reality glasses (Oculus Rift) and a virtual reality headset (Gear VR), browsing video content or performing a real-time video conversation by using a VR product becomes one of important applications of the VR product.

A common form of a VR terminal device is a head-mounted viewing device, and is usually a pair of glasses. A light-emitting screen is built in to display a video image. A position and direction sensing system is disposed inside the device, and can track various motions of a head of a user, and present video image content in a corresponding position and direction to the screen. The VR terminal device may further include an advanced interactive functional module such as a user eye tracking system, and present a user-interested area to the screen. To support presentation of video image content in all directions, a VR video image needs to include 360-degree omnidirectional visual information of three-dimensional space. This may be imagined as viewing a map on a terrestrial globe from an inner central position of the terrestrial globe. Therefore, the VR video image may also be referred to as a panoramic video image.

A video image may be understood as an image sequence of images that are collected at different moments. Because object movement is continuous in a time-space domain, content of adjacent images in the image sequence has high similarity. Therefore, various processing on a video may also be decomposed into corresponding processing performed separately on images in the video.

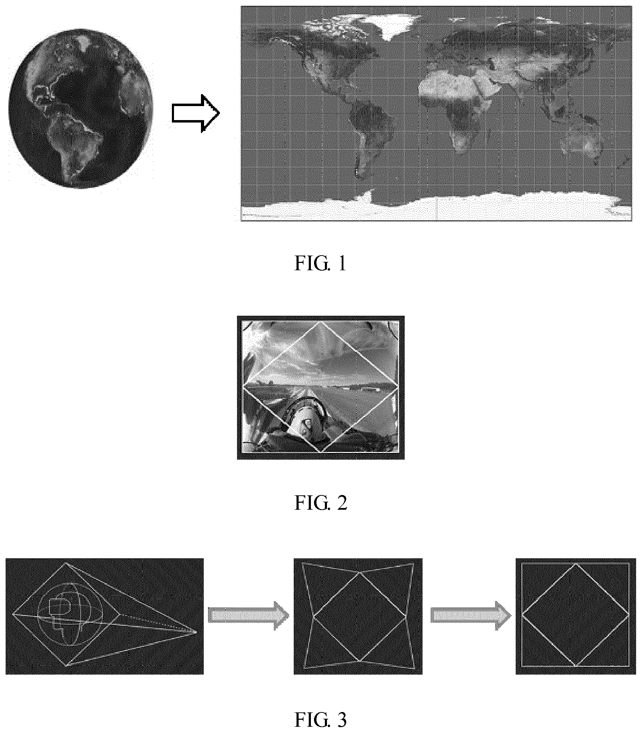

If the panoramic video image is in a spherical format, the panoramic video image cannot be conveniently represented, stored, or retrieved by using an index. Therefore, in the prior art, a spherical panorama is usually expanded to obtain a two-dimensional planar panorama, and then operations such as compression, processing, storage, and transmission are performed on the two-dimensional planar panorama. An operation of expanding the three-dimensional spherical panorama to obtain the two-dimensional planar panorama is referred to as mapping. Currently, there is a plurality of mapping methods, and a plurality of two-dimensional planar panorama formats are obtained correspondingly. A commonest panorama format is referred to as a longitude-latitude map, and the longitude-latitude map may be visually represented as FIG. 1. In the longitude-latitude map, images of areas close to the north and south poles are obtained through stretching, and there is severe distortion and data redundancy.

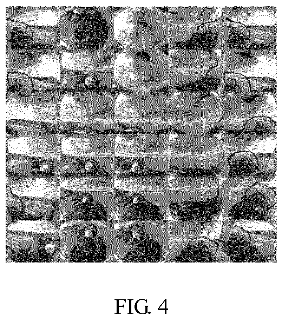

To overcome strong distortion of the longitude-latitude map, as shown in FIG. 2, a panorama may be projected into a pyramid-shaped pentahedron, and projection of a current field of view of a user is kept on a bottom of a pyramid. In this projection manner, an image resolution of the current field of view on the bottom of the pyramid is kept unchanged, resolution reduction processing is performed on side and rear fields of view of the user that are represented by the other four faces, then the pentahedron is expanded, and deformation processing is performed on the four side faces of the pyramid, so that all five faces of the pyramid are spliced into a square image, as shown in FIG. 3. To respond to a field-of-view switching requirement of the user, a space spherical surface may be further segmented into several viewpoints, a pyramid-formatted image is generated for each viewpoint, and a pyramid-formatted panorama of the several viewpoints is stored, as shown in FIG. 4.

Therefore, to meet a requirement of a user for viewing video content of any viewpoint, a large amount of video data needs to be stored, and video data of a plurality of viewpoints needs to be encoded. This increases data processing complexity and power consumption of an encoding or decoding device, and consequently increases difficulty for real-time panoramic video communication. The document YAGO SANCHEZ DE LA FUENTE ET AL: "Compressed Domain Video Processing for Tile Based Panoramic Streaming using SHVC",IMMERSIVE MEDIA EXPERIENCES, ACM, 2 PENN PLAZA, SUITE 701 NEW YORK NY 10121-0701 USA, 30 October 2015 (2015-10-30), pages 13-18, discloses tile based compression for panoramic images.

### SUMMARY

This and other drawbacks and disadvantages of the prior art are addressed by the present invention, which is directed to a video image method and apparatus according to claims 1 and 10.

The invention is set out in the appended set of claims; the further examples called embodiments in the description are illustrative examples.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of longitude-latitude map mapping according to an embodiment of the present invention;

FIG. 2 is a schematic diagram of a pyramid-formatted panorama according to an embodiment of the present invention;

FIG. 3 is a schematic diagram of a pyramid-formatted projection process according to an embodiment of the present invention;

FIG. 4 is a schematic diagram of a multi-view pyramid-formatted panorama according to an embodiment of the present invention;

FIG. 5 is a schematic diagram of a VR video image content end-to-end system according to an embodiment of the present invention;

FIG. 6 is a schematic flowchart of a video image encoding method according to an embodiment of the present invention;

FIG. 7 is a schematic diagram of a manner for obtaining a sub-image through division according to an embodiment of the present invention;

FIG. 8 (a) is a schematic diagram of another manner for obtaining a sub-image through division according to an embodiment of the present invention;

FIG. 8 (b) is a schematic diagram of still another manner for obtaining a sub-image through division according to an embodiment of the present invention;

FIG. 9 is a schematic diagram of a manner of representing position information and dimension information of a sub-image according to an embodiment of the present invention;

FIG. 10 is a schematic diagram of a sub-image serial number representation manner according to an embodiment of the present invention;

FIG. 11 is a schematic diagram of another sub-image serial number representation manner according to an embodiment of the present invention;

FIG. 12 is a schematic diagram of another sub-image serial number representation manner according to an embodiment of the present invention;

FIG. 13 is a schematic flowchart of a video image decoding method according to an embodiment of the present invention;

FIG. 14 is a schematic block diagram of a video image encoding apparatus according to an embodiment of the present invention;

FIG. 15 is a schematic block diagram of a video image decoding apparatus according to an embodiment of the present invention;

FIG. 16 is a schematic block diagram of a video image encoding apparatus according to an embodiment of the present invention; and

FIG. 17 is a schematic block diagram of a video image decoding apparatus according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

In the prior art, to adaptively obtain and play content of a corresponding field of view based on a viewing angle of a user, pyramid-formatted video content of all viewpoints need to be stored at a server end. This increases panoramic video storage overheads by times. In addition, a server needs to encode pyramid-formatted video content of all fields of view and then store encoded content. This increases VR video encoding complexity and power consumption by times. Consequently, real-time encoding and transmission of panoramic video content cannot be implemented because complexity is excessively high. In a technical solution for encoding and decoding a panoramic video image in the present invention, a part of content in a to-be-encoded image is selectively encoded, and at a decoder, a reconstructed image of a to-be-encoded image of an original-resolution version is adaptively generated based on a reconstructed image of a to-be-encoded image of a low-resolution version. This may reduce both encoding complexity and decoding complexity, and reduce panoramic video transmission bandwidth, so that real-time panoramic video communication may be implemented. In addition, the solution in the present invention may further significantly reduce the panoramic video storage overheads, so that large-scale deployment of a panoramic video streaming media service may be implemented.

To facilitate clear description of the technical solutions in the embodiments of the present invention, words such as "first", "second", and "third" are used in the embodiments of the present invention to distinguish between same items or similar items that provide basically same functions or purposes. A person skilled in the art may understand that the words such as "first", "second", and "third" do not limit a quantity and an execution sequence.

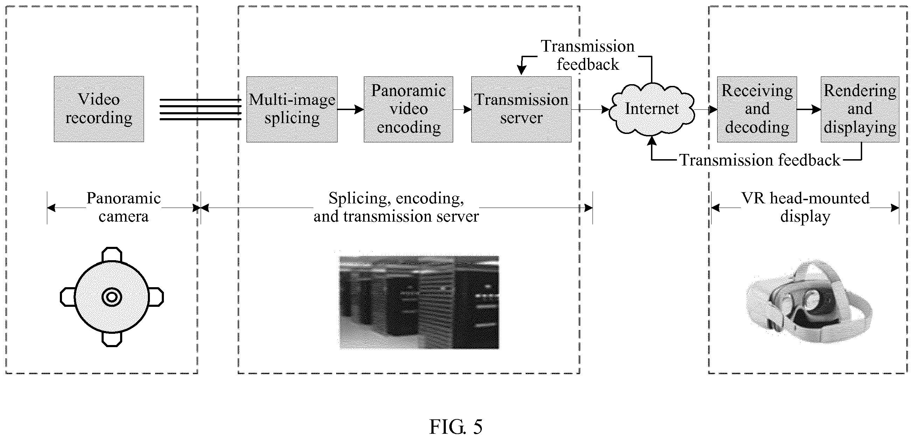

FIG. 5 is a schematic diagram of a VR video image content end-to-end system according to an embodiment of the present invention. The VR video image content end-to-end system includes a collection module, a splicing module, an encoding module, a transmission module, a decoding module, and a display module. In an application, based on orientation information sent by a corresponding user, a server needs to transmit found video image content of a corresponding viewpoint to the user in real time. In another application, VR content may be distributed to a user in a file form, and the user reads a VR content file from a medium such as a magnetic disk, and decodes and displays the VR content file.

An existing VR video image collection device is usually an annular multi-camera array or a spherical multi-camera array, and each camera collects images at different angles to obtain a multi-view video image in a current scenario. Then, image splicing is performed on the multi-view video image to obtain a three-dimensional spherical panorama, and then mapping is performed on the three-dimensional spherical panorama to obtain a two-dimensional planar panorama, used for input of subsequent operations such as processing, compression, transmission, and storage.

An existing VR video image display device is usually a head-mounted viewing device, and a two-dimensional planar panorama is entered into the VR video image display device. The VR display device projects a corresponding part of the two-dimensional planar panorama on a three-dimensional spherical surface based on a current viewing angle of a user, and presents the corresponding part to the user. The entered two-dimensional planar panorama may be received in real time, or may be read from a stored file. The entered two-dimensional planar panorama may have undergone operations such as image processing and compression.

User experience study indicates that, to achieve relatively high image quality, a spatial resolution of a two-dimensional planar panorama needs to reach 11520×5760, and this exceeds an 8K video resolution. However, limited by a decoding capability and a resolution of a display screen, a resolution of a panorama in an existing VR product is only 2K.

The solution of the present invention relates to encoding and decoding operations of a two-dimensional planar panorama, but a data format of a panorama is not limited. For ease of description, the following uses a longitude-latitude map as an example for description. However, the solution of the present invention may also be applied to two-dimensional planar panoramas in various formats such as a hexahedron, an annulus, and a polyhedron.

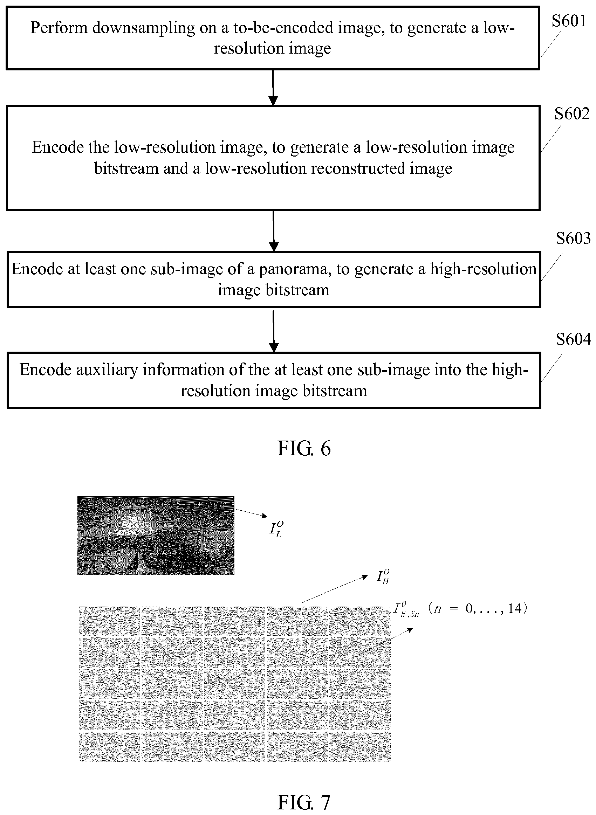

As shown in FIG. 6, an embodiment of the present invention provides a video image encoding method. S601. Perform downsampling on a to-be-encoded image, to generate a low-resolution image.

It is assumed that the to-be-encoded image in this embodiment of the present invention is a panorama $I_H^O$, and a low-resolution image, that is, a low-resolution version panorama $I_L^O$ is generated, as shown in FIG. 7.

Reducing a resolution of an image is usually referred to as downsampling performed on the image. In a feasible implementation, downsampling may be performed on the to-be-encoded image based on an integral-multiple ratio such as 2:1 or 4:1, or based on a fractional-multiple ratio such as 3:2 or 4:3, and no limitation is imposed. The multiple ratio is a ratio of a resolution of the to-be-encoded image to a resolution of the low-resolution image obtained through downsampling. In a feasible implementation, the multiple ratio may be preset;

and in another feasible implementation, during encoding, the multiple ratio may be manually set depending on a requirement for transmission bandwidth or video image quality, and no limitation is imposed. A typical integral-multiple-ratio downsampling operation includes low-pass filtering performed on a signal and then extracting of an original sampling signal at intervals based on a specific multiple ratio, to obtain a downsampling signal, where various low-pass filters such as a Gaussian filter and a bilateral filter may be used. A typical fractional-multiple-ratio downsampling operation includes an interpolation operation performed in a specified sampling position by using a preset interpolation filter, to obtain a downsampling signal, where various interpolation filters such as a bilinear filter and a bicubic filter may be used. Different downsampling methods are used in different embodiments, to obtain a low-resolution panorama, and no limitation is imposed on a specific downsampling method.

S602. Encode the low-resolution image, to generate a low-resolution image bitstream and a low-resolution reconstructed image.

In this embodiment of the present invention, compression and encoding is performed on $I_L^O$, to generate a compressed bitstream of $I_L^O$ and obtain a reconstructed image $I_L^R$ of $I_L^O$. In a feasible implementation, compression and encoding may be performed on $I_L^O$ by using any known video or image compression and encoding method, for example, a video coding standard H.265 or H.264, or a video image encoding method specified in standards such as a Joint Photographic Experts Group (JPEG) image encoding standard, or by using an intra-frame coding method, or by using an interframe coding method, and no limitation is imposed.

In a feasible implementation, a decoder needs to know the downsampling multiple ratio described in S601. In a feasible implementation, an encoder and the decoder agree on the downsampling multiple ratio without encoding or information transmission between the encoder and the decoder. For example, the downsampling multiple ratio may be a specified value, or there is a preset mapping relationship between the downsampling multiple ratio and an attribute such as the resolution of the to-be-encoded image, and no limitation is imposed. In a feasible implementation, the downsampling multiple ratio is encoded and transmitted. For example, the downsampling multiple ratio of $I_L^O$ may be carried in a slice header of a first slice or carried in a picture parameter set (PPS), and no limitation is imposed. In a feasible implementation, the resolution of the to-be-encoded image and the resolution of the low-resolution image are respectively encoded into a high-resolution image bitstream and the low-resolution image bitstream in respective bitstream encoding processes, and the decoder may obtain the downsampling multiple ratio by separately parsing the high-resolution image bitstream and the low-resolution image bitstream and comparing a resolution of a high-resolution image and the resolution of the low-resolution image that are obtained through parsing.

S603. Encode at least one sub-image of a panorama, to generate a high-resolution image bitstream.

It should be understood that, in this embodiment of the present invention, the to-be-encoded panorama may be divided into several sub-images, where a sub-image is a pixel set of any continuous area in the to-be-encoded image, sub-images do not overlap with each other, a sub-image may be a pixel or a plurality of pixels, and no limitation is imposed. For example, the pixel set may be a rectangular pixel block, such as a pixel block of $256 \times 256$ or $1024 \times 512$.

It should be understood that, boundary expansion processing may be performed in advance on the panorama in this embodiment of the present invention, so that the panorama can be divided into an integral quantity of sub-images. Boundary expansion processing is a common processing operation of video image encoding and decoding, and details are not described herein.

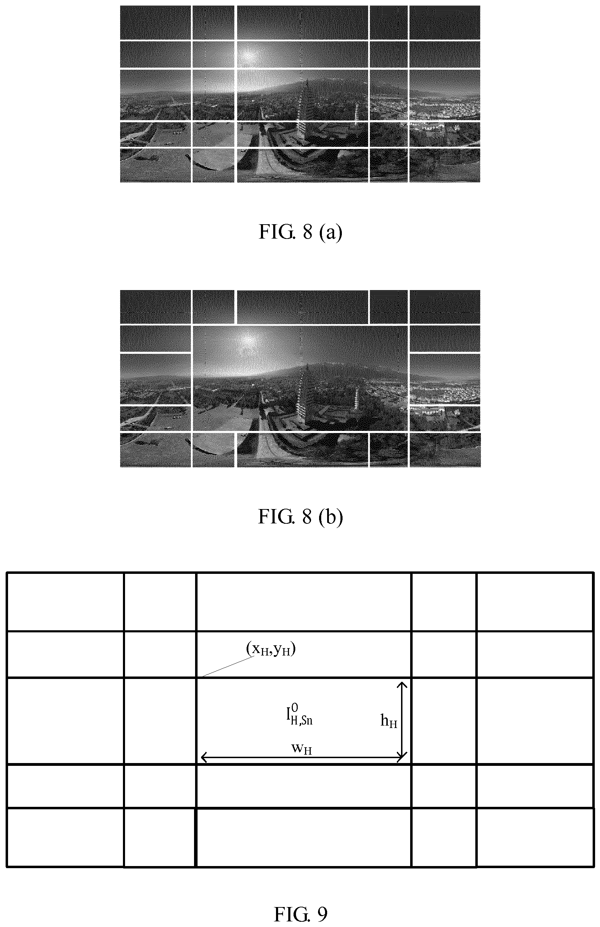

As shown in FIG. 7, the sub-images may be equal-sized image blocks. Alternatively, as shown in FIG. 8 (a), the sub-images may be unequal-sized image blocks. FIG. 8 (b) shows a more flexible image block division method.

Any sub-image of the to-be-encoded image can be determined based on dimension information of the sub-image and position information of the sub-image in the to-be-encoded image.

In a feasible implementation, the dimension information and the position information of the sub-image may be represented as follows: As shown in FIG. 9, dimension information of a sub-image $I^O_{H,Sn}$ is represented by using a width and a height ($w_H$, $h_H$) of the sub-image $I^O_{H,Sn}$, and position information of the sub-image $I^O_{H,Sn}$ is represented by using an offset ($x_H$, $y_H$) of an upper left corner pixel position of the sub-image $I^O_{H,Sn}$ relative to an upper left corner pixel position of the sub-image $I^O_{H,Sn}$ in the panorama $I^O_H$. The width and the height of the sub-image may be measured in a basic unit of an image pixel, or a fixed-size image block, such as an image block of $4 \times 4$. A position offset of the sub-image relative to the panorama may be measured in a unit of an image pixel or a fixed-size image block, such as an image block of $4 \times 4$.

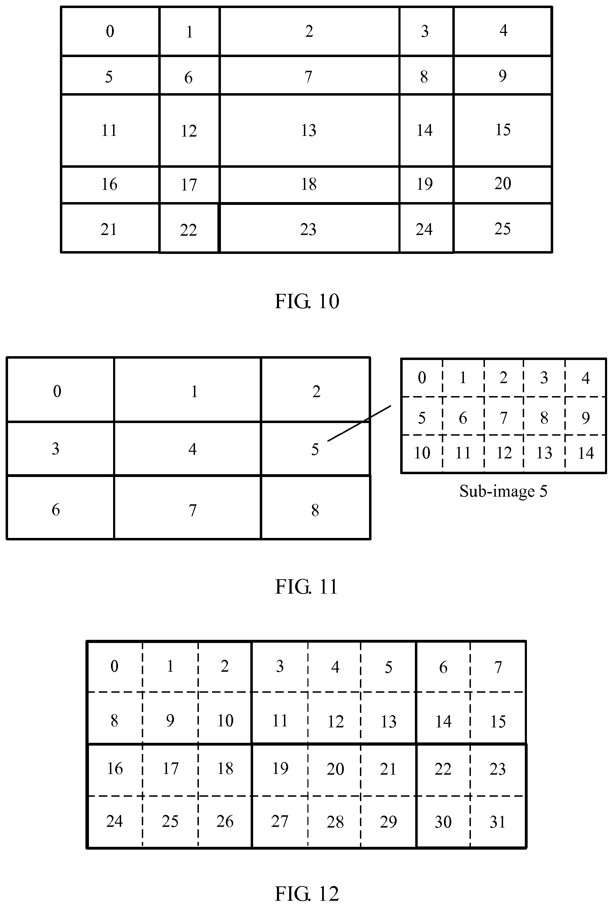

In another feasible implementation, the sub-images in the panorama may be numbered in a preset arrangement sequence, as shown in FIG. 10. Position information and dimension information of each sub-image are determined by using both panorama division information and sub-image serial number information. For example, in FIG. 10, heights of a first sub-image row and a second sub-image row are 64 pixels and 64 pixels, and widths of a first sub-image column, a second sub-image column, and a third sub-image column are respectively 256, 128, 512 pixels. Therefore, position information of a sub-image with a serial number of 7 is $x_H=256+128=384$ and $y_H=64$, and dimension information of the sub-image is $w_H=512$ and $h_H=64$.

In a feasible implementation, a sub-image includes a coding unit. The sub-image includes at least one coding unit, and a coding unit includes at least one basic coding unit. The basic coding unit is a basic unit for encoding or decoding an image, and includes pixels of a preset quantity and distribution. For example, the coding unit may be a rectangular image block of $256 \times 256$ pixels, and the basic coding unit may be a rectangular image block of $16 \times 16$ or $64 \times 256$ or $256 \times 128$ pixels, and no limitation is imposed. In some video image encoding standards, the basic coding unit may be further divided into smaller prediction units, and the smaller prediction units are used as basic units for predictive coding. For example, a prediction unit may be a rectangular image block of $4 \times 4$ or $16 \times 8$ or $64 \times 256$ pixels, and no limitation is imposed.

In a feasible implementation, a manner of determining a coding unit in a sub-image is shown in FIG. 11. For example, a rectangular image block with a serial number 7 in a sub-image 5 is a coding unit with dimension information of ($w_B$, $h_B$), and position information of the rectangular image block in the sub-image 5 is ($2W_B$, $h_B$). With reference to position information ($x_{H5}$, $y_{B5}$) of the sub-image 5, it may be determined that an offset of the coding unit 7 in the panorama is ($x_{H5} + 2w_B$, $y_{B5} + h_B$).

In a feasible implementation, a manner of determining a basic coding unit in a sub-image is shown in FIG. 12. A boundary of a sub-image is represented by a solid line, and a boundary of a coding unit is represented by a dashed line. For example, all coding units in the panorama may be numbered in a given sequence, and position information of the coding units in the panorama is determined through encoding.

In a feasible implementation, the dimension information of the sub-image and the position information of the sub-image in the panorama need to be encoded and transmitted to the decoder. The dimension information and the position information may be referred to as auxiliary information. In a feasible implementation, dimension information and position information of a basic coding unit or a coding unit in a sub-image are used as auxiliary information, to represent the dimension information and the position information of the sub-image. For example, the position information of the sub-image may be position information of a coding unit in an upper left corner of the sub-image, and the dimension information of the sub-image may be determined by a quantity of rows and a quantity of columns occupied by coding units in the sub-image.

A method for generating the high-resolution image bitstream may be any video or image compression and encoding method in step S602. A method the same as S602 may be used, or a method different from S602 may be used, and no limitation is imposed.

For example, in a feasible implementation, a predictive coding method is used, to generate the high-resolution image bitstream including the at least one sub-image.

S6031. Perform mapping on auxiliary information of the at least one sub-image based on a resolution ratio, to determine dimension information of a low-resolution sub-image corresponding to the at least one sub-image in the low-resolution reconstructed image and position information of the low-resolution sub-image in the low-resolution reconstructed image.

Specifically, a corresponding image area $I_{L,Sn}^{R}$ of the sub-image $I_{H,Sn}^{O}$ in the encoded reconstructed image $I_{L}^{R}$ of the low-resolution panorama $I_{L}^{O}$ is obtained based on the position information and the dimension information of the sub-image $I_{H,Sn}^{O}$. The offset $(x_H, y_H)$ and the dimension $(w_H, h_H)$ of the sub-image $I_{H,Sn}^{O}$ may be reduced based on the downsampling multiple ratio in step S601, to obtain an offset $(x_L, y_L)$ and a dimension $(w_L, h_L)$ of $I_{L,Sn}^{R}$ in $I_{L}^{R}$, so as to obtain $I_{L,Sn}^{R}$.

S6032. Perform upsampling on the low-resolution sub-image based on the resolution ratio, to obtain a predictor of the at least one sub-image.

Specifically, a resolution increase operation is performed on $I_{L,Sn}^{R}$, to obtain a predicted sub-image $I_{L2H,Sn}^{R}$ with a resolution the same as that of the current sub-image $I_{H,Sn}^{O}$. For example, an image upsampling method may be used to implement the resolution increase operation. Similar to an image downsampling process, the upsampling operation may be performed by using any interpolation filter. For example, various interpolation filters such as a bilinear filter and a bicubic filter may be used, and details are not described again.

S6033. Obtain a residual value of the at least one sub-image based on the predictor and an original pixel value of the at least one sub-image, and encode the residual value, to generate the high-resolution image bitstream.

Specifically, predictive coding is performed on the sub-image $I_{H,Sn}^{O}$ by using a predicted sub-image $I_{L2H,Sn}^{R}$, to generate a compressed bitstream of $I_{H,Sn}^{O}$. Because the predicted sub-image $I_{L2H,Sn}^{R}$ is obtained by performing upsampling on a corresponding image area of the sub-image $I_{H,Sn}^{O}$ in $I_{L}^{R}$, a pixel value in $I_{L2H,Sn}^{R}$ may be directly used as a predictor of a pixel value in a corresponding position in $I_{H,Sn}^{O}$, a difference between the predictor and an original pixel value of the sub-image $I_{H,Sn}^{O}$ is derived, to obtain residual values of all pixels in $I_{H,Sn}^{O}$, and then the residual values are encoded to generate the compressed bitstream, namely, a high-resolution image bitstream, of $I_{H,Sn}^{O}$. The predictive coding operation may be performed by using the sub-image $I_{H,Sn}^{O}$ as a whole, or the predictive coding operation may be selectively performed on each coding unit in the sub-image $I_{H,Sn}^{O}$ in a unit of a coding unit. In a feasible implementation, the predictive coding may be further selectively performed on at least one basic coding unit in the coding unit. In a feasible implementation, the predictive coding may be further selectively performed on at least one prediction unit in a basic coding unit.

S604. Encode the auxiliary information of the at least one sub-image into the high-resolution image bitstream.

In a feasible implementation, when the auxiliary information includes a position offset of an upper left corner pixel of the sub-image relative to an upper left corner pixel of the panorama and a width and a height of the sub-image, for example, the width and the height $(w_H, h_H)$ and the offset $(x_H, y_H)$ of the sub-image shown in FIG. 9, or a serial number of the sub-image in a preset arrangement sequence in the panorama, for example, a serial number 7 of a sub-image shown in FIG. 10, it is assumed that this type of auxiliary information is first auxiliary information. The first auxiliary information is encoded into a slice header of a first slice of the sub-image that is represented by the auxiliary information and that is in the high-resolution image bitstream, and is transmitted to the decoder. It should be understood that the first auxiliary information may also be encoded in another bitstream position that represents the sub-image, and no limitation is imposed.

In a feasible implementation, when the auxiliary information includes a mode in which the panorama is divided into sub-images, it is assumed that this type of auxiliary information is second auxiliary information. The division mode is used to represent a method for dividing the panorama into the sub-images. For example, the division mode may be dividing the panorama into equal-sized sub-images shown in FIG. 7, or unequal-sized sub-images shown in FIG. 8 (a), or a more flexible division manner shown in FIG. 8 (b). Specifically, the division mode may include start and end points and a length of each longitude and latitude line, or may be an index number of a preset division mode, and no limitation is imposed. The second auxiliary information is encoded into a picture parameter set of the high-resolution image bitstream. It should be understood that the second auxiliary information may also be encoded in another bitstream position that represents an overall image attribute, and no limitation is imposed.

It should be understood that the decoder may determine a sub-image by decoding a position offset of an upper left corner pixel of the sub-image relative to the upper left corner pixel of the panorama and a width and a height of the sub-image, or may determine a sub-image by decoding a serial number of the sub-image in the preset arrangement sequence in the panorama and the mode in which the panorama is divided into the sub-images. Therefore, the first auxiliary information and the second auxiliary information may be individually used or used together in different feasible implementations.

It should be understood that, in this embodiment of the present invention, in the to-be-encoded panorama, at least one sub-image is selectively encoded into the high-resolution image bitstream. Not all sub-images need to be encoded according to specific embodiments.

According to this embodiment of the present invention, a part of an image is selectively encoded, and auxiliary information of the encoded part of the image is encoded into a bitstream, so that data that needs to be encoded and stored is reduced, encoding efficiency is improved, and power consumption is reduced. In addition, a low-resolution image is used as prior information for encoding a high-resolution image, so that efficiency of encoding the high-resolution image is improved.

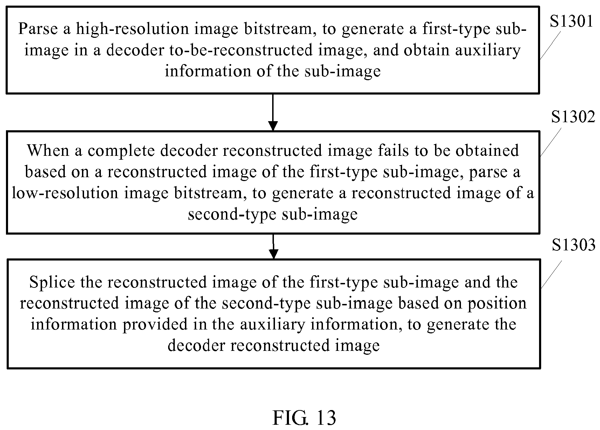

As shown in FIG. 13, an embodiment of the present invention provides a video image decoding method.

As described in the video image encoding method provided in the embodiments of the present invention, not all sub-images in the to-be-encoded image need to be encoded and transmitted to a decoder. In a feasible implementation, not all sub-image bitstreams that are selectively encoded and transmitted by an encoder need to be forwarded to the decoder. For example, only a sub-image bitstream related to a current field of view of a user may be transmitted to the decoder. In a feasible implementation, the decoder does not need to decode all received sub-image bitstreams. For example, when a decoding capability or power consumption is limited, the decoder may choose to decode some of the received sub-image bitstreams. It is assumed that a sub-image that is in a decoder reconstructed image and that is generated by the decoder by decoding a sub-image bitstream is a first-type sub-image, and that an image part in the decoder to-be-reconstructed image other than the first-type sub-image includes a second-type sub-image. The decoder to-be-reconstructed image is a to-be-reconstructed original-resolution panorama. A sub-image bitstream is generated by the encoder by performing original-resolution encoding on a sub-image, and in comparison with an encoded bitstream that is of a low-resolution version and that is generated by the encoder, the sub-image bitstream is referred to as a high-resolution image bitstream.

S1301. Parse a high-resolution image bitstream, to generate a first-type sub-image in a decoder to-be-reconstructed image, and obtain auxiliary information of the sub-image.

Corresponding to step S603, the high-resolution image bitstream is parsed by using a decoding method corresponding to the encoding method, to generate the first-type sub-image in a to-be-decoded panorama, and the auxiliary information of the first-type sub-image is obtained by parsing the high-resolution image bitstream.

For example, in a feasible implementation, a predictive coding method is used to parse the high-resolution image bitstream, to generate a reconstructed image of a first-type sub-image.

S13011: Parse the high-resolution image bitstream, to obtain the auxiliary information and a residual value of the first-type sub-image in the decoder to-be-reconstructed image.

Corresponding to step S6033, the residual value of the sub-image may be obtained by parsing the high-resolution image bitstream. Corresponding to step S604, the auxiliary information of the sub-image is obtained through parsing in a bitstream position corresponding to the auxiliary information, and the auxiliary information may be used to determine dimension information of the sub-image and position information of the sub-image in the panorama. A specific operation process is corresponding to the encoding process in steps S6033 and S604, and details are not described again.

S13012. Perform mapping on the auxiliary information of the first-type sub-image based on a resolution ratio, to determine dimension information of a first-type low-resolution sub-image corresponding to the first-type sub-image in a low-resolution to-be-reconstructed image and position information of the first-type low-resolution sub-image in the low-resolution to-be-reconstructed image.

A manner in which the decoder knows the resolution ratio, namely, the downsampling multiple ratio, is determined in step S602. Corresponding to the encoder, in some feasible implementations, the encoder and the decoder agree on the downsampling multiple ratio without encoding or information transmission between the encoder and the decoder. In a feasible implementation, the encoded downsampling multiple ratio is decoded after transmission. For example, the downsampling multiple ratio may be obtained through parsing in a position corresponding to a slice header of a first slice in a low-resolution bitstream or a position of a picture parameter set. In a feasible implementation, a resolution of a to-be-encoded image and a resolution of a low-resolution image are respectively encoded into the high-resolution image bitstream and the low-resolution image bitstream in respective bitstream encoding processes, and the decoder may obtain the downsampling multiple ratio by separately parsing the high-resolution image bitstream and the low-resolution image bitstream and comparing a resolution of a high-resolution image and the resolution of the low-resolution image that are obtained through parsing.

After the resolution ratio is obtained, the position information and dimension information corresponding to the sub-image in the low-resolution image, namely, the position information and the dimension information of the first-type low-resolution sub-image, may be obtained with reference to the method in step S6031, and details are not described again.

S13013. Parse a low-resolution image bitstream, to generate the first-type low-resolution sub-image.

Corresponding to step S602, the low-resolution image bitstream is parsed by using a decoding method corresponding to the encoding method, and the first-type low-resolution sub-image is generated based on the dimension and position information of the first-type low-resolution sub-image that are determined in step S13012. A specific implementation method is similar to step S602, and details are not described again.

S13014. Perform upsampling on the first-type low-resolution sub-image based on the resolution ratio, to obtain a predictor of the first-type sub-image.

A specific implementation method is similar to step S6032, and details are not described again.

S13015. Generate a reconstructed image of the first-type sub-image based on the predictor and the residual value of the first-type sub-image.

Specifically, the residual value of the first-type sub-image that is obtained through parsing in step S13011 is added to the predictor obtained by performing upsampling on the low-resolution sub-image in step S13014, to obtain the reconstructed image of the first-type sub-image.

S1302. When a complete decoder reconstructed image fails to be obtained based on the reconstructed image of the first-type sub-image, parse the low-resolution image bitstream, to generate a reconstructed image of a second-type sub-image.

As described above, the auxiliary information represents the position information and the dimension information of the first-type sub-image in the decoder to-be-reconstructed image, and the first-type sub-image and the second-type sub-image jointly constitute the to-be-decoded panorama.

The position information and the dimension information of the first-type sub-image may be obtained based on the auxiliary information. After the high-resolution image bitstream is received and is parsed by the decoder, if no complete image of the to-be-reconstructed panorama is obtained based on all reconstructed images of first-type sub-images, it indicates that the to-be-reconstructed panorama further includes the second-type sub-image, and it can be determined that a position of a pixel set other than the first-type sub-image is a position of the second-type sub-image.

In this case, similar to steps S13012 to S13014, the low-resolution bitstream is parsed to obtain a second-type low-resolution sub-image of the second-type sub-image in a corresponding position of the low-resolution decoder to-be-reconstructed image, and an upsampling operation is performed on the second-type low-resolution sub-image based on the same resolution ratio, to obtain the reconstructed image of the second-type sub-image.

S1303. Splice the reconstructed image of the first-type sub-image and the reconstructed image of the second-type sub-image based on the position information provided in the auxiliary information, to generate the decoder reconstructed image.

According to this embodiment of the present invention, a part of an image is selectively encoded, and auxiliary information of the encoded part of the image is encoded into a bitstream; and at the decoder, a low-resolution image obtained through upsampling is used to fill a reconstructed image part that is in the decoder to-be-reconstructed image and that has not been generated, so that data that needs to be encoded and stored is reduced, encoding efficiency is improved, and power consumption is reduced. In addition, a low-resolution image is used as prior information for encoding a high-resolution image, so that efficiency of encoding the high-resolution image is improved.

In a feasible implementation, the decoder may parse the low-resolution bitstream based on an entire image, to generate the low-resolution reconstructed image. Specifically, a video image decoding method may be as follows:

S1201. Parse a low-resolution image bitstream, to generate a low-resolution reconstructed image.
S1202. Parse a high-resolution image bitstream, to generate a first-type sub-image in a decoder to-be-reconstructed image, and obtain auxiliary information of the sub-image.
S1202 includes the following steps:

S12021. Parse the high-resolution image bitstream, to obtain auxiliary information and a residual value of the first-type sub-image in the decoder to-be-reconstructed image.

S12022. Perform mapping on the auxiliary information of the first-type sub-image based on a resolution ratio, to determine dimension information of a first-type low-resolution sub-image corresponding to the first-type sub-image in the low-resolution reconstructed image and position information of the first-type low-resolution sub-image in the low-resolution reconstructed image.

S12023. Perform upsampling on the first-type low-resolution sub-image based on the resolution ratio, to obtain a predictor of the first-type sub-image.

S12024. Generate a reconstructed image of the first-type sub-image based on the predictor and the residual value of the first-type sub-image.

S1203. When a complete decoder reconstructed image fails to be obtained based on the reconstructed image of the first-type sub-image, generate a reconstructed image of a second-type sub-image based on the low-resolution reconstructed image.

S1204. Splice the reconstructed image of the first-type sub-image and the reconstructed image of the second-type sub-image based on the position information provided in the auxiliary information, to generate the decoder reconstructed image.

In a feasible implementation, upsampling may alternatively be performed on the generated low-resolution reconstructed image after step S1201, for use in subsequent steps.

According to this embodiment of the present invention, a part of an image is selectively encoded, and auxiliary information of the encoded part of the image is encoded into a bitstream; and at the decoder, a low-resolution image obtained through upsampling is used to fill a reconstructed image part that is in the decoder to-be-reconstructed image and that has not been generated, so that data that needs to be encoded and stored is reduced, encoding efficiency is improved, and power consumption is reduced. In addition, a low-resolution image is used as prior information for encoding a high-resolution image, so that efficiency of encoding the high-resolution image is improved.

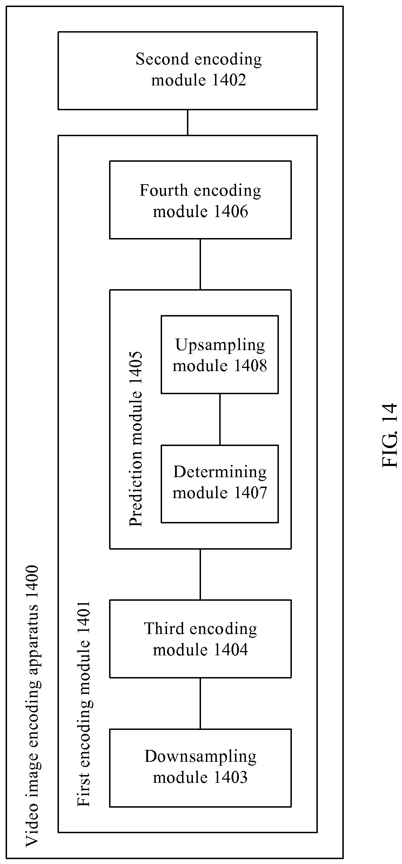

As shown in FIG. 14, an embodiment of the present invention provides a video image encoding apparatus 1400, including:

a first encoding module 1401, configured to encode at least one sub-image of a to-be-encoded image, to generate a high-resolution image bitstream, where the sub-image is a pixel set of any continuous area in the to-be-encoded image, and sub-images of the to-be-encoded image do not overlap with each other; and

a second encoding module 1402, configured to encode auxiliary information of the at least one sub-image into the high-resolution image bitstream, where the auxiliary information represents dimension information of the sub-image and position information of the sub-image in the to-be-encoded image. The second encoding module 1402 may specifically perform step S604.

The first encoding module 1401 includes:

a downsampling module 1403, configured to perform downsampling on the to-be-encoded image, to generate a low-resolution image, where the downsampling module 1403 may specifically perform step S601;

a third encoding module 1404, configured to encode the low-resolution image, to generate a low-resolution image bitstream and a low-resolution reconstructed image, where the third encoding module 1404 may specifically perform step S602;

a prediction module 1405, configured to obtain a predictor of the at least one sub-image based on the low-resolution reconstructed image, a resolution ratio between the to-be-encoded image and the low-resolution image, and the auxiliary information of the at least one sub-image; and

a fourth encoding module 1406, configured to: obtain a residual value of the at least one sub-image based on the predictor and an original pixel value of the at least one sub-image, and encode the residual value, to generate the high-resolution image bitstream, where the fourth encoding module 1406 may specifically perform step S6033.

The prediction module 1405 includes:

a determining module 1407, configured to perform mapping on the auxiliary information of the at least one sub-image based on the resolution ratio, to determine dimension information of a low-resolution sub-image corresponding to the at least one sub-image in the low-resolution reconstructed image and position information of the low-resolution sub-image in the low-resolution reconstructed image, where the determining module 1407 may specifically perform step S6031; and

an upsampling module 1408, configured to perform upsampling on the low-resolution sub-image based on the resolution ratio, to obtain the predictor of the at least one sub-image, where the upsampling module 1408 may specifically perform step S6032.

According to this embodiment of the present invention, a part of an image is selectively encoded, and auxiliary information of the encoded part of the image is encoded into a bitstream, so that data that needs to be encoded and stored is reduced, encoding efficiency is improved, and power consumption is reduced. In addition, a low-resolution image is used as prior information for encoding a high-resolution image, so that efficiency of encoding the high-resolution image is improved.

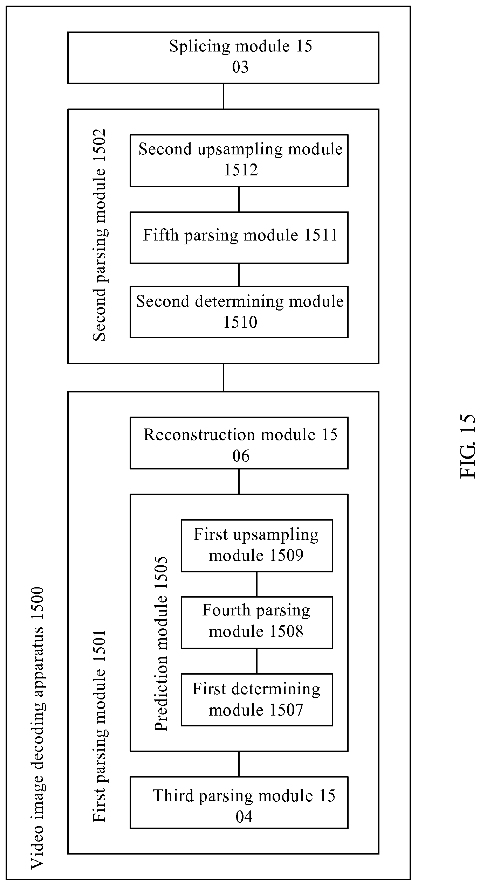

As shown in FIG. 15, an embodiment of the present invention provides a video image decoding apparatus 1500, including:

a first parsing module 1501, configured to parse a high-resolution image bitstream, to generate a reconstructed image of a first-type sub-image and auxiliary information of the first-type sub-image, where the auxiliary information represents dimension information of the sub-image and position information of the sub-image in a decoder to-be-reconstructed image, the sub-image is a pixel set of any continuous area in the decoder to-be-reconstructed image, and sub-images of the decoder to-be-reconstructed image do not overlap with each other;

a second parsing module 1502, configured to: when a complete decoder reconstructed image fails to be obtained based on the reconstructed image of the first-type sub-image, parse a low-resolution image bitstream, to generate a reconstructed image of a second-type sub-image, where the second-type sub-image has a resolution the same as that of the first-type sub-image; and

a splicing module 1503, configured to splice the reconstructed image of the first-type sub-image and the reconstructed image of the second-type sub-image based on the auxiliary information, to generate the decoder reconstructed image, where the splicing module 1503 may specifically perform step S1303.

The first parsing module 1501 includes:

a third parsing module 1504, configured to parse the high-resolution image bitstream, to obtain the auxiliary information and a residual value of the first-type sub-image in the decoder to-be-reconstructed image, where the third parsing module 1504 may specifically perform step S13011;

a prediction module 1505, configured to obtain a predictor of the first-type sub-image based on the low-resolution bitstream, a resolution ratio between the decoder to-be-reconstructed image and a low-resolution to-be-reconstructed image, and the auxiliary information of the first-type sub-image; and

a reconstruction module 1506, configured to generate the reconstructed image of the first-type sub-image based on the predictor and the residual value of the first-type sub-image, where the reconstruction module 1506 may specifically perform step S13015.

The prediction module 1505 includes:

a first determining module 1507, configured to perform mapping on the auxiliary information of the first-type sub-image based on the resolution ratio, to determine dimension information of a first-type low-resolution sub-image corresponding to the first-type sub-image in the low-resolution to-be-reconstructed image and position information of the first-type low-resolution sub-image in the low-resolution to-be-reconstructed image, where the first determining module 1507 may specifically perform step S13012;

a fourth parsing module 1508, configured to parse the low-resolution image bitstream, to generate the first-type low-resolution sub-image, where the fourth parsing module 1508 may specifically perform step S13013; and

a first upsampling module 1509, configured to perform upsampling on the first-type low-resolution sub-image based on the resolution ratio, to obtain the predictor of the first-type sub-image, where the first upsampling module 1509 may specifically perform step S13014.

The second parsing module 1502 includes:

a second determining module 1510, configured to determine, based on the auxiliary information of the first-type sub-image and the resolution ratio between the decoder to-be-reconstructed image and the low-resolution to-be-reconstructed image, dimension information of a second-type low-resolution sub-image corresponding to the second-type sub-image in the low-resolution to-be-reconstructed image and position information of the second-type low-resolution sub-image in the low-resolution to-be-reconstructed image, where the second determining module 1510 may specifically perform step S1302;

a fifth parsing module 1511, configured to parse the low-resolution image bitstream, to generate the second-type low-resolution sub-image, where the fifth parsing module 1511 may specifically perform step S1302; and

a second upsampling module 1512, configured to perform upsampling on the second-type low-resolution sub-image based on the resolution ratio, to generate the reconstructed image of the second-type sub-image, where the second upsampling module 1512 may specifically perform step S1302.

According to this embodiment of the present invention, a part of an image is selectively encoded, and auxiliary information of the encoded part of the image is encoded into a bitstream; and at the decoder, a low-resolution image obtained through upsampling is used to fill a reconstructed image part that is in the decoder to-be-reconstructed image and that has not been generated, so that data that needs to be encoded and stored is reduced, encoding efficiency is improved, and power consumption is reduced. In addition, a low-resolution image is used as prior information for encoding a high-resolution image, so that efficiency of encoding the high-resolution image is improved.

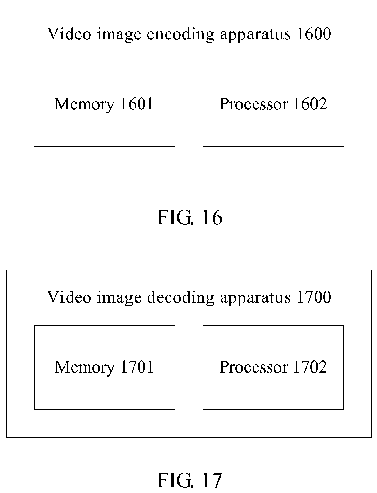

As shown in FIG. 16, an embodiment of the present invention provides a video image encoding apparatus 1600, including a memory 1601 and a processor 1602 coupled to the memory. The memory is configured to store code and an instruction. The processor is configured to perform the following steps according to the code and the instruction: encoding at least one sub-image of a to-be-encoded image, to generate a high-resolution image bitstream, where the sub-image is a pixel set of any continuous area in the to-be-encoded image, and sub-images of the to-be-encoded image do not overlap with each other; and encoding auxiliary information of the at least one sub-image into the high-resolution image bitstream, where the auxiliary information represents dimension information of the sub-image and position information of the sub-image in the to-be-encoded image. The processor is specifically configured to: perform downsampling on the to-be-encoded image, to generate a low-resolution image; encode the low-resolution image, to generate a low-resolution image bitstream and a low-resolution reconstructed image; obtain a predictor of the at least one sub-image based on the low-resolution reconstructed image, a resolution ratio between the to-be-encoded image and the low-resolution image, and the auxiliary information of the at least one sub-image; and obtain a residual value of the at least one sub-image based on the predictor and an original pixel value of the at least one sub-image, and encode the residual value, to generate the high-resolution image bitstream.

As shown in FIG. 17, an embodiment of the present invention provides a video image decoding apparatus 1700, including a memory 1701 and a processor 1702 coupled to the memory. The memory is configured to store code and an instruction. The processor is configured to perform the following steps according to the code and the instruction: parsing a high-resolution image bitstream, to generate a reconstructed image of a first-type sub-image and auxiliary information of the first-type sub-image, where the auxiliary information represents dimension information of the sub-image and position information of the sub-image in a decoder to-be-reconstructed image, the sub-image is a pixel set of any continuous area in the decoder to-be-reconstructed image, and sub-images of the decoder to-be-reconstructed image do not overlap with each other; when a complete decoder reconstructed image fails to be obtained based on the reconstructed image of the first-type sub-image, parsing a low-resolution image bitstream, to generate a reconstructed image of a second-type sub-image, where the second-type sub-image has a resolution the same as that of the first-type sub-image; and splicing the reconstructed image of the first-type sub-image and the reconstructed image of the second-type sub-image based on the auxiliary information, to generate the decoder reconstructed image.

According to this embodiment of the present invention, a part of an image is selectively encoded, and auxiliary information of the encoded part of the image is encoded into a bitstream; and at the decoder, a low-resolution image obtained through upsampling is used to fill a reconstructed image part that is in the decoder to-be-reconstructed image and that has not been generated, so that data that needs to be encoded and stored is reduced, encoding efficiency is improved, and power consumption is reduced. In addition, a low-resolution image is used as prior information for encoding a high-resolution image, so that efficiency of encoding the high-resolution image is improved.

It may be clearly understood by a person skilled in the art that, for the purpose of convenient and brief description, division of the foregoing function modules is used as an example for illustration. In actual application, the foregoing functions can be allocated to different function modules and implemented based on a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of a software function unit.

When the integrated unit is implemented in the form of a software functional unit and sold or used as an independent product, the integrated unit may be stored in a computer-readable storage medium. Based on such an understanding, all or some of the technical solutions may be implemented in a form of a software product. The software product is stored in a storage medium, and includes several instructions for instructing a computer device (which may be a personal computer, a server, or a network device) or a processor to perform all or some of the steps of the methods described in the embodiments of the present invention. The storage medium is a non-transitory medium, and includes any medium that can store program code, such as a flash memory, a removable hard disk, a read-only memory, a random access memory, a magnetic disk, or an optical disc.

**Claims**

1. A video image decoding method, comprising:

parsing a high-resolution image bitstream, to generate a reconstructed image of a first-type sub-image and auxiliary information of the first-type sub-image, wherein the auxiliary information represents dimension information of the sub-image and position information of the sub-image in a decoder to-be-reconstructed image, the sub-image is a pixel set of any continuous area in the decoder to-be-reconstructed image, and sub-images of the decoder to-be-reconstructed image do not overlap with each other; when a complete decoder reconstructed image fails to be obtained based on the reconstructed image of the first-type sub-image, parsing a low-resolution image bitstream, to generate a reconstructed image of a second-type sub-image, wherein the second-type sub-image is upsampled to have a resolution the same as that of the first-type sub-image; and splicing the reconstructed image of the first-type sub-image and the reconstructed image of the second-type sub-image based on the auxiliary information, to generate the decoder reconstructed image; wherein the parsing a high-resolution image bitstream, to generate a reconstructed image of a first-type sub-image and auxiliary information of the first-type sub-image comprises:

parsing the high-resolution image bitstream, to obtain the auxiliary information and a residual value of the first-type sub-image in the decoder to-be-reconstructed image; obtaining a predictor of the first-type sub-image based on the low-resolution image bitstream, a resolution ratio between the decoder to-be-reconstructed image and a low-resolution to-be-reconstructed image, and the auxiliary information of the first-type sub-image; and generating the reconstructed image of the first-type sub-image based on the predictor and the residual value of the first-type sub-image; wherein the obtaining a predictor of the first-type sub-image based on the low-resolution bitstream, a resolution ratio between the decoder to-be-reconstructed image and a low-resolution to-be-reconstructed image, and the auxiliary information of the first-type sub-image comprises:

performing mapping on the auxiliary information of the first-type sub-image based on the resolution ratio, to determine dimension information of a first-type low-resolution sub-image corresponding to the first-type sub-image in the low-resolution to-be-reconstructed image and position information of the first-type low-resolution sub-image in the low-resolution to-be-reconstructed image; parsing the low-resolution image bitstream, to generate the first-type low-resolution sub-image; and performing upsampling on the first-type low-resolution sub-image based on the resolution ratio, to obtain the predictor of the first-type sub-image.

2. The method according to claim 1, wherein the parsing a low-resolution image bitstream, to generate a reconstructed image of a second-type sub-image comprises:

determining, based on the auxiliary information of the first-type sub-image and the resolution ratio between the decoder to-be-reconstructed image and the low-resolution to-be-reconstructed image, dimension information of a second-type low-resolution sub-image corresponding to the second-type sub-image in the low-resolution to-be-reconstructed image and position information of the second-type low-resolution sub-image in the low-resolution to-be-reconstructed image; parsing the low-resolution image bitstream, to generate the second-type low-resolution sub-image; and performing upsampling on the second-type low-resolution sub-image based on the resolution ratio, to generate the reconstructed image of the second-type sub-image.

3. The method according to claim 1 or 2, wherein the auxiliary information comprises first auxiliary information, and the first auxiliary information comprises: a position offset of an upper left corner pixel of the sub-image relative to an upper left corner pixel of the decoder to-be-reconstructed image and a width and a height of the sub-image, or a serial number of the sub-image in a preset arrangement sequence in the decoder to-be-reconstructed image.

4.  The method according to claim 3, wherein a slice header of a first slice of the sub-image in the high-resolution image bitstream carries the first auxiliary information.

5.  The method according to any one of claims 1 to 4, wherein the auxiliary information further comprises second auxiliary information, and the second auxiliary information comprises a mode in which the decoder to-be-reconstructed image is divided into the sub-image.

6.  The method according to claim 5, wherein a picture parameter set of the high-resolution image bitstream carries the second auxiliary information.

7.  The method according to any one of claims 1 to 6, wherein the resolution ratio is a preset value.

8.  The method according to any one of claims 1 to 6, further comprising:
    parsing a slice header of a first slice or a picture parameter set of the low-resolution image bitstream, to obtain the resolution ratio.

9.  The method according to any one of claims 1 to 6, further comprising:

    parsing the high-resolution image bitstream, to obtain a resolution of the decoder to-be-reconstructed image; and
    parsing the low-resolution image bitstream, to obtain a resolution of the low-resolution to-be-reconstructed image.

10. A video image decoding apparatus, comprising:

    a first parsing module, configured to parse a high-resolution image bitstream, to generate a reconstructed image of a first-type sub-image and auxiliary information of the first-type sub-image, wherein the auxiliary information represents dimension information of the sub-image and position information of the sub-image in a decoder to-be-reconstructed image, the sub-image is a pixel set of any continuous area in the decoder to-be-reconstructed image, and sub-images of the decoder to-be-reconstructed image do not overlap with each other; and
    a second parsing module, configured to: when a complete decoder reconstructed image fails to be obtained based on the reconstructed image of the first-type sub-image, parse a low-resolution image bitstream, to generate a reconstructed image of a second-type sub-image, wherein the second-type sub-image is upsampled to have a resolution the same as that of the first-type sub-image; and a splicing module, configured to splice the reconstructed image of the first-type sub-image and the reconstructed image of the second-type sub-image based on the auxiliary information, to generate the decoder reconstructed image;
wherein the first parsing module comprises:

    a third parsing module, configured to parse the high-resolution image bitstream, to obtain the auxiliary information and a residual value of the first-type sub-image in the decoder to-be-reconstructed image;
    a prediction module, configured to obtain a predictor of the first-type sub-image based on the low-resolution bitstream, a resolution ratio between the decoder to-be-reconstructed image and a low-resolution to-be-reconstructed image, and the auxiliary information of the first-type sub-image; and
    a reconstruction module, configured to generate the reconstructed image of the first-type sub-image based on the predictor and the residual value of the first-type sub-image;
    wherein the prediction module comprises:

        a first determining module, configured to perform mapping on the auxiliary information of the first-type sub-image based on the resolution ratio, to determine dimension information of a first-type low-resolution sub-image corresponding to the first-type sub-image in the low-resolution to-be-reconstructed image and position information of the first-type low-resolution sub-image in the low-resolution to-be-reconstructed image;
        a fourth parsing module, configured to parse the low-resolution image bitstream, to generate the first-type low-resolution sub-image; and
        a first upsampling module, configured to perform upsampling on the first-type low-resolution sub-image based on the resolution ratio, to obtain the predictor of the first-type sub-image.

11. The apparatus according to claim 10, wherein the second parsing module comprises:

a second determining module, configured to determine, based on the auxiliary information of the first-type sub-image and the resolution ratio between the decoder to-be-reconstructed image and the low-resolution to-be-reconstructed image, dimension information of a second-type low-resolution sub-image corresponding to the second-type sub-image in the low-resolution to-be-reconstructed image and position information of the second-type low-resolution sub-image in the low-resolution to-be-reconstructed image;

a fifth parsing module, configured to parse the low-resolution image bitstream, to generate the second-type low-resolution sub-image; and

a second upsampling module, configured to perform upsampling on the second-type low-resolution sub-image based on the resolution ratio, to generate the reconstructed image of the second-type sub-image.

**Patentansprüche**

1. Videobilddecodierungsverfahren, das Folgendes umfasst:

Parsen eines Bitstroms eines hochauflösenden Bildes, um ein rekonstruiertes Bild eines Teilbildes einer ersten Art und Hilfsinformationen des Teilbildes der ersten Art zu erzeugen, wobei die Hilfsinformationen Dimensionsinformationen des Teilbildes und Positionsinformationen des Teilbildes in einem durch einen Decoder zu rekonstruierenden Bild darstellen, wobei das Teilbild ein Pixelsatz eines beliebigen fortlaufenden Bereichs eines durch den Decoder zu rekonstruierenden Bildes ist, und die Teilbilder des durch den Decoder zu rekonstruierenden Bildes nicht miteinander überlappen;

wenn ein vollständiges durch den Decoder rekonstruiertes Bild basierend auf dem rekonstruierten Bild des Teilbildes der ersten Art nicht erhalten werden kann, Parsen eines Bitstroms eines niedrigauflösenden Bildes, um ein rekonstruiertes Bild eines Teilbildes einer zweiten Art zu erzeugen, wobei das Teilbild der zweiten Art aufwärtsgetastet wird, um eine Auflösung aufzuweisen, die die Gleiche wie die des Teilbildes der ersten Art ist; und

Spleißen des rekonstruierten Bildes des Teilbildes der ersten Art und des rekonstruierten Bildes des Teilbildes der zweiten Art basierend auf den Hilfsinformationen, um das durch den Decoder rekonstruierte Bild zu erzeugen; wobei das Parsen eines Bitstroms des hochauflösenden Bildes, um ein rekonstruiertes Bild eines Teilbildes der ersten Art und Hilfsinformationen des Teilbildes der ersten Art zu erzeugen, Folgendes umfasst:

Parsen des Bitstroms des hochauflösenden Bildes, um die Hilfsinformationen und einen Restwert des Teilbildes der ersten Art in dem durch den Decoder zu rekonstruierenden Bild zu erhalten;

Erhalten eines Prädiktors des Teilbildes der ersten Art basierend auf dem Bitstrom des niedrigauflösenden Bildes, einem Auflösungsverhältnis zwischen dem durch den Decoder zu rekonstruierenden Bild und einem niedrigauflösenden zu rekonstruierenden Bild und der Hilfsinformationen des Teilbilds der ersten Art; und

Erzeugen des rekonstruierten Bildes des Teilbildes der ersten Art basierend auf dem Prädiktor und dem Restwert des Teilbildes der ersten Art;

wobei das Erhalten eines Prädiktors des Teilbildes der ersten Art basierend auf dem niedrigauflösenden Bitstrom, einem Auflösungsverhältnis zwischen dem durch den Decoder zu rekonstruierenden Bild und einem niedrigauflösenden zu rekonstruierenden Bild und der Hilfsinformationen des Teilbildes der ersten Art Folgendes umfasst:

Durchführen eines Mappings an den Hilfsinformationen des Teilbildes der ersten Art basierend auf dem Auflösungsverhältnis, um Dimensionsinformationen eines niedrigauflösenden Teilbildes der ersten Art, die dem Teilbild der ersten Art in dem niedrigauflösenden zu rekonstruierenden Bild entsprechen, und Positionsinformationen des niedrigauflösenden Teilbildes der ersten Art in dem niedrigauflösenden zu rekonstruierenden Bild zu bestimmen;

Parsen des niedrigauflösenden Bitstroms, um das niedrigauflösende Teilbild der ersten Art zu erzeugen; und

Durchführen eines Aufwärtstastens an dem niedrigauflösenden Teilbild der ersten Art basierend auf dem Auflösungsverhältnis, um den Prädiktor des Teilbildes der ersten Art zu erhalten.

2. Verfahren nach Anspruch 1, wobei das Parsen eines Bitstroms des niedrigauflösenden Bildes, um ein rekonstruiertes Bild eines Teilbildes der zweiten Art zu erzeugen, Folgendes umfasst:

Bestimmen, basierend auf den Hilfsinformationen des Teilbildes der ersten Art und dem Auflösungsverhältnis zwischen dem durch den Decoder zu rekonstruierenden Bild und dem niedrigauflösenden zu rekonstruierenden Bild, von Dimensionsinformationen eines niedrigauflösenden Teilbildes der zweiten Art, die dem Teilbild der zweiten Art in dem niedrigauflösenden zu rekonstruierenden entsprechen, und Positionsinformationen des niedrigauflösenden Teilbildes der zweiten Art in dem niedrigauflösenden zu rekonstruierenden Bild;
Parsen des Bitstroms des niedrigauflösenden Bildes, um das niedrigauflösende Teilbild der zweiten Art zu erzeugen; und
Durchführen des Aufwärtstastens an dem niedrigauflösenden Teilbild der zweiten Art basierend auf dem Auflösungsverhältnis, um das rekonstruierte Bild des Teilbildes der zweiten Art zu erzeugen.

3. Verfahren nach Anspruch 1 oder 2, wobei die Hilfsinformationen erste Hilfsinformationen umfassen und die ersten Hilfsinformationen Folgendes umfassen: einen Positionsversatz eines Pixels einer oberen linken Ecke des Teilbildes relativ zu einem Pixel der oberen linken Ecke des durch den Decoder zu rekonstruierenden Bildes und eine Breite und eine Höhe des Teilbildes oder eine Seriennummer des Teilbildes in einer voreingestellten Anordnungssequenz in dem durch den Decoder zu rekonstruierenden Bild.

4. Verfahren nach Anspruch 3, wobei ein Slice-Header eines ersten Slice des Teilbildes in dem Bitstrom des hochauflösenden Bildes die ersten Hilfsinformationen trägt.

5. Verfahren nach einem der Ansprüche 1 bis 4, wobei die Hilfsinformationen ferner zweite Hilfsinformationen umfassen und die zweiten Hilfsinformationen einen Modus umfassen, in dem das durch den Decoder zu rekonstruierende Bild in das Teilbild aufgeteilt ist.

6. Verfahren nach Anspruch 5, wobei ein Abbildungsparametersatz des Bitstroms des hochauflösenden Bildes die zweiten Hilfsinformationen trägt.

7. Verfahren nach einem der Ansprüche 1 bis 6, wobei das Auflösungsverhältnis ein voreingestellter Wert ist.

8. Verfahren nach einem der Ansprüche 1 bis 6, das ferner Folgendes umfasst:
Parsen eines Slice-Headers eines ersten Slice oder eines Abbildungsparametersatzes des Bitstroms des niedrigauflösenden Bildes, um das Auflösungsverhältnis zu erhalten.

9. Verfahren nach einem der Ansprüche 1 bis 6, das ferner Folgendes umfasst:

Parsen des Bitstroms des hochauflösenden Bildes, um eine Auflösung des durch den Decoder zu rekonstruierenden Bildes zu erhalten; und
Parsen des Bitstroms des niedrigauflösenden Bildes, um eine Auflösung des niedrigauflösenden zu rekonstruierenden Bildes zu erhalten.

10. Videobilddecodierungsvorrichtung, die Folgendes umfasst:

ein erstes Parsing-Modul, das konfiguriert ist, um einen Bitstrom des hochauflösenden Bildes zu parsen, um ein rekonstruiertes Bild eines Teilbildes der ersten Art und Hilfsinformationen des Teilbildes der ersten Art zu erzeugen, wobei die Hilfsinformationen Dimensionsinformationen des Teilbildes und Positionsinformationen des Teilbildes in einem durch den Decoder zu rekonstruierenden Bild darstellen, wobei das Teilbild ein Pixelsatz eines beliebigen fortlaufenden Bereichs in dem durch den Decoder zu rekonstruierenden Bild ist und die Teilbilder des durch den Decoder zu rekonstruierenden Bildes nicht miteinander überlappen; und
ein zweites Parsing-Modul, das für Folgendes konfiguriert ist:

wenn ein vollständiges durch den Decoder rekonstruiertes Bild basierend auf dem rekonstruierten Bild des Teilbildes der ersten Art nicht erhalten werden kann, Parsen eines Bitstroms des niedrigauflösenden Bildes, um ein rekonstruiertes Bild eines Teilbildes der zweiten Arts zu erzeugen, wobei das Teilbild der zweiten Art aufwärtsgetastet wird, um eine Auflösung aufzuweisen, die die Gleiche wie die des Teilbildes der ersten Art ist; und ein Spleißmodul, das konfiguriert ist, um das rekonstruierte Bild des Teilbildes der ersten Art und das rekonstruierte Bild des Teilbildes der zweiten Art basierend auf den Hilfsinformationen zu spleißen, um das durch den Decoder rekonstruierte Bild zu erzeugen;
wobei das erste Parsing-Modul Folgendes umfasst:

ein drittes Parsing-Modul, das konfiguriert ist, um den Bitstrom des hochauflösenden Bildes zu parsen, um die Hilfsinformationen und einen Restwert des Teilbildes der ersten Art in dem durch den Decoder zu rekonstruierenden Bild zu erhalten;
ein Prädiktionsmodul, das konfiguriert ist, um einen Prädiktor des Teilbildes der ersten Art basierend auf dem niedrigauflösenden Bitstrom, einem Auflösungsverhältnis zwischen dem durch den Decoder zu rekonstruierenden Bild und einem niedrigauflösenden zu rekonstruierenden Bild und die Hilfsinformationen des Teilbildes der ersten Art zu erhalten; und

ein Rekonstruktionsmodul, das konfiguriert ist, um das rekonstruierte Bild des Teilbildes der ersten Art basierend auf dem Prädiktor und dem Restwert des Teilbildes der ersten Art zu erzeugen;

wobei das Prädiktionsmodul Folgendes umfasst:

ein erstes Bestimmungsmodul, das konfiguriert ist, um das Mapping an Hilfsinformationen des Teilbildes der ersten Art basierend auf dem Auflösungsverhältnis durchzuführen, um die Dimensionsinformationen eines niedrigauflösenden Teilbildes der ersten Art, die dem Teilbild der ersten Art in dem niedrigauflösenden zu rekonstruierenden Bild entsprechen, und Positionsinformationen des niedrigauflösenden Teilbildes der ersten Art in dem niedrigauflösenden zu rekonstruierenden Bild zu bestimmen;

ein viertes Parsing-Modul, das konfiguriert ist, um den Bitstrom des niedrigauflösenden Bildes zu parsen, um das niedrigauflösende Teilbild der ersten Art zu erzeugen; und

ein erstes Aufwärtstastungsmodul, das konfiguriert ist, um das Aufwärtstasten an dem niedrigauflösenden Teilbild der ersten Art basierend auf dem Auflösungsverhältnis durchzuführen, um den Prädiktor des Teilbildes der ersten Art zu erhalten.

11. Vorrichtung nach Anspruch 10, wobei das zweite Parsing-Modul Folgendes umfasst:

ein zweites Bestimmungsmodul, das konfiguriert ist, um, basierend auf den Hilfsinformationen des Teilbildes der ersten Art und dem Auflösungsverhältnis zwischen dem durch den Decoder zu rekonstruierenden Bild und dem niedrigauflösenden zu rekonstruierenden Bild, Dimensionsinformationen eines niedrigauflösenden Teilbildes der zweiten Art, die dem Teilbild der zweiten Art in dem niedrigauflösenden zu rekonstruierenden Bild entsprechen, und Positionsinformationen des niedrigauflösenden Teilbildes der zweiten Art in dem niedrigauflösenden zu rekonstruierenden Bild zu bestimmen;

ein fünftes Parsing-Modul, das konfiguriert ist, um den Bitstrom des niedrigauflösenden Bildes zu parsen, um das niedrigauflösende Teilbild der zweiten Art zu erzeugen; und

ein zweites Aufwärtstastungsmodul, das konfiguriert ist, um das Aufwärtstasten an dem niedrigauflösenden Teilbild der zweiten Art basierend auf dem Auflösungsverhältnis durchzuführen, um das rekonstruierte Bild des Teilbildes der zweiten Art zu erzeugen.

## Revendications

1. Procédé de décodage d'image vidéo, comprenant :

l'analyse d'un train de bits d'image haute résolution, pour générer une image reconstruite d'une sous-image de premier type et des informations auxiliaires de la sous-image de premier type, les informations auxiliaires représentant des informations de dimension de la sous-image et des informations de position de la sous-image dans une image à reconstruire par décodeur, la sous-image étant un ensemble de pixels de toute zone continue dans l'image à reconstruire par décodeur, et les sous-images de l'image à reconstruire par décodeur ne se chevauchant pas ;

lorsqu'une image complète reconstruite par décodeur ne peut pas être obtenue en fonction de l'image reconstruite de la sous-image de premier type, l'analyse d'un train de bits d'image basse résolution, pour générer une image reconstruite d'une sous-image de second type, la sous-image de second type étant suréchantillonnée afin que la résolution soit identique à celle de la sous-image de premier type ; et

l'assemblage de l'image reconstruite de la sous-image de premier type et de l'image reconstruite de la sous-image de second type en fonction des informations auxiliaires, pour générer l'image reconstruite par décodeur ;

l'analyse d'un train de bits d'image haute résolution, pour générer une image reconstruite d'une sous-image de premier type et des informations auxiliaires de la sous-image de premier type comprenant :

l'analyse du train de bits d'image haute résolution, pour obtenir les informations auxiliaires et une valeur résiduelle de la sous-image de premier type dans l'image à reconstruire par décodeur ;

l'obtention d'un prédicteur de la sous-image de premier type en fonction du train de bits d'image basse résolution, d'un rapport de résolution entre l'image à reconstruire par décodeur et une image à faible résolution à reconstruire, et des informations auxiliaires du sous-image de premier type ; et

la génération de l'image reconstruite de la sous-image de premier type en fonction du prédicteur et de la valeur résiduelle de la sous-image de premier type ;

l'obtention d'un prédicteur de la sous-image de premier type en fonction du train de bits basse résolution, d'un rapport de résolution entre l'image à reconstruire par décodeur et une image basse résolution à reconstruire, et les informations auxiliaires de la sous-image de premier type comprenant :

la réalisation d'un mappage sur les informations auxiliaires de la sous-image de premier type en fonction du rapport de résolution, pour déterminer des informations de dimension d'une sous-image basse résolution de premier type correspondant à la sous-image de premier type dans l'image basse résolution à reconstruire et des informations de position de la sous-image basse résolution de premier type dans l'image basse résolution à reconstruire ;

l'analyse du train de bits d'image basse résolution, pour générer la sous-image basse résolution de premier type ; et

la réalisation d'un suréchantillonnage sur la sous-image basse résolution de premier type en fonction du rapport de résolution, pour obtenir le prédicteur de la sous-image de premier type.

2. Procédé selon la revendication 1, dans lequel l'analyse d'un train de bits d'image haute résolution, pour générer une image reconstruite d'une sous-image de premier type et des informations auxiliaires de la sous-image de premier type comprend :

la détermination, en fonction des informations auxiliaires de la sous-image de premier type et du rapport de résolution entre l'image à reconstruire par décodeur et l'image basse résolution à reconstruire, des informations de dimension d'une sous-image basse résolution de second type correspondant à la sous-image de second type dans l'image basse résolution à reconstruire et des informations de position de la sous-image basse résolution de second type dans l'image basse résolution à reconstruire ;

l'analyse du train de bits d'image basse résolution, pour générer la sous-image basse résolution de second type ; et

la réalisation d'un suréchantillonnage sur la sous-image basse résolution du second type en fonction du rapport de résolution, pour générer l'image reconstruite de la sous-image de second type.

3. Procédé selon la revendication 1 ou la revendication 2, dans lequel les informations auxiliaires comprennent des premières informations auxiliaires, et les premières informations auxiliaires comprennent :
un décalage de position d'un pixel de coin supérieur gauche de la sous-image par rapport à un pixel de coin supérieur gauche de l'image à reconstruire par décodeur et une largeur et une hauteur de la sous-image, ou un numéro de série de la sous-image dans une séquence d'agencement prédéfinie dans l'image à reconstruire par décodeur.

4. Procédé selon la revendication 3, dans lequel un en-tête de tranche d'une première tranche de la sous-image dans le train de bits d'image haute résolution transporte les premières informations auxiliaires.

5. Procédé selon l'une quelconque des revendications 1 à 4, dans lequel les informations auxiliaires comprennent en outre des secondes informations auxiliaires, et les secondes informations auxiliaires comprennent un mode dans lequel l'image à reconstruire par décodeur est divisée dans la sous-image.

6. Procédé selon la revendication 5, dans lequel un ensemble de paramètres d'image du train de bits d'image haute résolution transporte les secondes informations auxiliaires.

7. Procédé selon l'une quelconque des revendications 1 à 6, dans lequel le rapport de résolution est une valeur prédéterminée.

8. Procédé selon l'une quelconque des revendications 1 à 6, comprenant en outre :
l'analyse d'un en-tête de tranche d'une première tranche ou d'un ensemble de paramètres d'image du train de bits d'image basse résolution, pour obtenir le rapport de résolution.

9. Procédé selon l'une quelconque des revendications 1 à 6, comprenant en outre :

l'analyse du train de bits d'image haute résolution, pour obtenir une résolution de l'image à reconstruire par décodeur ; et
l'analyse du train de bits d'image basse résolution, pour obtenir une résolution de l'image basse résolution à reconstruire.

**10.** Appareil de décodage d'image vidéo, comprenant :

un premier module d'analyse, configuré pour analyser un train de bits d'image haute résolution, pour générer une image reconstruite d'une sous-image de premier type et des informations auxiliaires de la sous-image de premier type, les informations auxiliaires représentant des informations de dimension de la sous-image et des informations de position de la sous-image dans une image à reconstruire par décodeur, la sous-image étant un ensemble de pixels de toute zone continue dans l'image à reconstruire par décodeur, et des sous-images de l'image à reconstruire par décodeur ne se chevauchant pas ; et
un deuxième module d'analyse, configuré pour :

lorsqu'une image complète reconstruite par décodeur ne peut pas être obtenue en fonction de l'image reconstruite de la sous-image de premier type, analyser un train de bits d'image basse résolution, pour générer une image reconstruite d'une sous-image de second type, la sous-image de second type étant suréchantillonnée pour que la résolution soit identique à celle de la sous-image de premier type ; et
un module d'assemblage, configuré pour assembler l'image reconstruite de la sous-image de premier type et l'image reconstruite de la sous-image de second type en fonction des informations auxiliaires, pour générer l'image reconstruite par décodeur ;
le premier module d'analyse comprenant :

un troisième module d'analyse, configuré pour analyser le train de bits d'image haute résolution, pour obtenir les informations auxiliaires et une valeur résiduelle de la sous-image de premier type dans l'image à reconstruire par décodeur ;
un module de prédiction, configuré pour obtenir un prédicteur de la sous-image de premier type en fonction du train de bits basse résolution, un rapport de résolution entre l'image à reconstruire par décodeur et une image basse résolution à reconstruire, et les informations auxiliaires de la sous-image de premier type ; et
un module de reconstruction, configuré pour générer l'image reconstruite de la sous-image de premier type en fonction du prédicteur et de la valeur résiduelle de la sous-image de premier type ;
le module de prédiction comprenant :

un premier module de détermination, configuré pour réaliser un mappage sur les informations auxiliaires de la sous-image de premier type en fonction du rapport de résolution, pour déterminer des informations de dimension d'une sous-image basse résolution de premier type correspondant à la sous-image de premier type dans l'image basse résolution à reconstruire et des informations de position de la sous-image basse résolution de premier type dans l'image basse résolution à reconstruire ;
un quatrième module d'analyse, configuré pour analyser le train de bits d'image basse résolution, pour générer la sous-image basse résolution de premier type ; et
un premier module de suréchantillonnage, configuré pour réaliser un suréchantillonnage sur la sous-image basse résolution de premier type en fonction du rapport de résolution, pour obtenir le prédicteur de la sous-image de premier type.

**11.** Appareil selon la revendication 10, dans lequel le deuxième module d'analyse comprend :

un second module de détermination, configuré pour déterminer, en fonction des informations auxiliaires de la sous-image de premier type et du rapport de résolution entre l'image à reconstruire par décodeur et l'image basse résolution à reconstruire, des informations de dimension d'une sous-image basse résolution de second type correspondant à la sous-image de second type dans l'image basse résolution à reconstruire et des informations de position de la sous-image basse résolution de second type dans l'image basse résolution à reconstruire ;
un cinquième module d'analyse, configuré pour analyser le train de bits d'image basse résolution, pour générer la sous-image basse résolution de second type ; et
un second module de suréchantillonnage, configuré pour réaliser un suréchantillonnage sur la sous-image basse résolution de second type en fonction du rapport de résolution, pour générer l'image reconstruite de la sous-image de second type.

FIG. 1

FIG. 2

FIG. 3

FIG. 4

FIG. 5

Perform downsampling on a to-be-encoded image, to generate a low-resolution image — S601

Encode the low-resolution image, to generate a low-resolution image bitstream and a low-resolution reconstructed image — S602

Encode at least one sub-image of a panorama, to generate a high-resolution image bitstream — S603

Encode auxiliary information of the at least one sub-image into the high-resolution image bitstream — S604

FIG. 6

$I_L^O$

$I_H^O$

$I_{H,Sn}^O \quad (n = 0, \ldots, 14)$

FIG. 7

FIG. 8 (a)

FIG. 8 (b)

FIG. 9

| 0 | 1 | 2 | 3 | 4 |
|---|---|---|---|---|
| 5 | 6 | 7 | 8 | 9 |
| 11 | 12 | 13 | 14 | 15 |
| 16 | 17 | 18 | 19 | 20 |
| 21 | 22 | 23 | 24 | 25 |

FIG. 10

| 0 | 1 | 2 |
|---|---|---|
| 3 | 4 | 5 |
| 6 | 7 | 8 |

| 0 | 1 | 2 | 3 | 4 |
|---|---|---|---|---|
| 5 | 6 | 7 | 8 | 9 |
| 10 | 11 | 12 | 13 | 14 |

Sub-image 5

FIG. 11

| 0 | 1 | 2 | 3 | 4 | 5 | 6 | 7 |
|---|---|---|---|---|---|---|---|
| 8 | 9 | 10 | 11 | 12 | 13 | 14 | 15 |
| 16 | 17 | 18 | 19 | 20 | 21 | 22 | 23 |
| 24 | 25 | 26 | 27 | 28 | 29 | 30 | 31 |

FIG. 12

Parse a high-resolution image bitstream, to generate a first-type sub-image in a decoder to-be-reconstructed image, and obtain auxiliary information of the sub-image

S1301

When a complete decoder reconstructed image fails to be obtained based on a reconstructed image of the first-type sub-image, parse a low-resolution image bitstream, to generate a reconstructed image of a second-type sub-image

S1302

Splice the reconstructed image of the first-type sub-image and the reconstructed image of the second-type sub-image based on position information provided in the auxiliary information, to generate the decoder reconstructed image

S1303

FIG. 13

Video image encoding apparatus 1400

First encoding module 1401

Second encoding module 1402

Fourth encoding module 1406

Prediction module 1405

Upsampling module 1408

Determining module 1407

Third encoding module 1404

Downsampling module 1403

FIG. 14

Video image decoding apparatus 1500

Splicing module 15
03

Second parsing module 1502

Second upsampling module
1512

Fifth parsing module 1511

Second determining module
1510

First parsing module 1501

Reconstruction module 15
06

Prediction module 1505

First upsampling
module 1509

Fourth parsing
module 1508

First determining
module 1507

Third parsing module 15
04

FIG. 15

Video image encoding apparatus 1600

Memory 1601 — Processor 1602

FIG. 16

Video image decoding apparatus 1700

Memory 1701 — Processor 1702

FIG. 17

**EP 3 457 697 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Compressed Domain Video Processing for Tile Based Panoramic Streaming using SHVC. **YAGO SANCHEZ DE LA FUENTE et al.** IMMERSIVE MEDIA EXPERIENCES. ACM, 30 October 2015, 13-18